(19)

Europäisches
Patentamt
European
Patent Office
Office européen
des brevets

(11) **EP 2 469 857 A2**

(12) **EUROPEAN PATENT APPLICATION**

(43) Date of publication:
**27.06.2012 Bulletin 2012/26**

(51) Int Cl.:
***H04N 7/26*** (2006.01)

(21) Application number: **11009310.1**

(22) Date of filing: **24.11.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **21.12.2010 JP 2010285170**

(71) Applicant: **CANON KABUSHIKI KAISHA
Tokyo (JP)**

(72) Inventor: **Yoshitani, Akihiro
Tokyo (JP)**

(74) Representative: **Weser, Thilo
Weser & Kollegen
Patentanwälte
Radeckestrasse 43
81245 München (DE)**

(54) **Image processing apparatus, image processing method, and storing medium**

(57)     This invention is directed to an image processing apparatus and method capable of creating image data at light processing load by executing cropping from an image and connection of a plurality of images, and storing medium for storing a program executing the method. According to this method, image data containing the difference between encoded data of two consecutive blocks corresponding to an image divided into a plurality of blocks is input. When cropping or connection of an image based on the image data is instructed, the difference between encoded data of two blocks which newly become consecutive in an image newly acquired by cropping or connection of the image is calculated based on encoded data contained in the image data. Image data which corresponds to the newly acquired image and contains the calculated difference as encoded data corresponding to a block of the newly acquired image is created.

**F I G. 7**

EP 2 469 857 A2

**Description**

**BACKGROUND OF THE INVENTION**

Field of the Invention

The present invention relates to an image processing apparatus for processing image data, image processing method, and storing medium.

Description of the Related Art

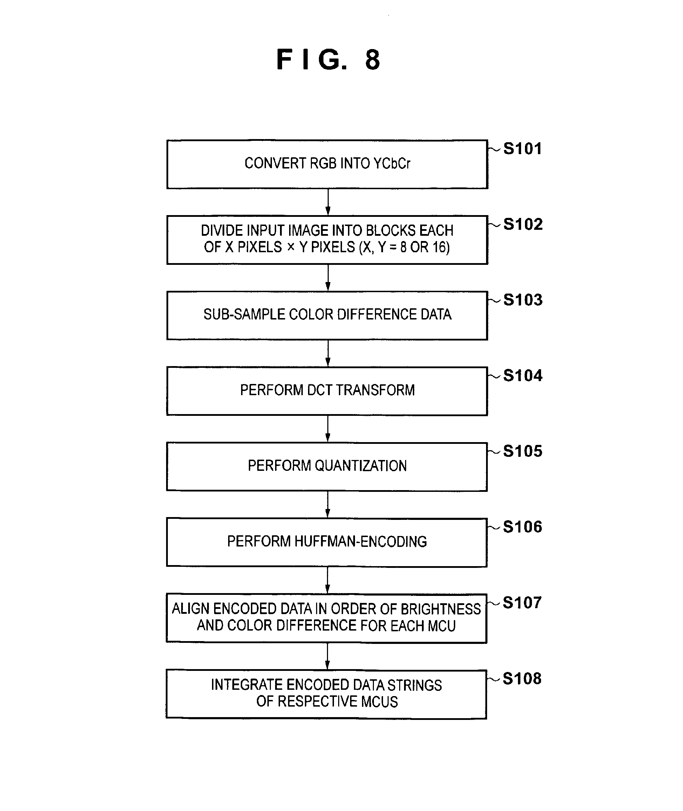

As an image compression algorithm, a JPEG baseline standard is commonly used. Fig. 8 is a flowchart showing an algorithm used to convert RGB digital image data into JPEG data of the baseline standard.

In step S101 of this flowchart, the R, G, and B pixel values of each pixel are converted into Y, Cb, and Cr (brightness and color difference) data. In step S102, the converted brightness and color difference data are divided into blocks each of x × y pixels (x, y = 8 or 16). In step S103, the color difference data of each block obtained in step S102 undergoes reduction processing to become a block of 8 × 8 pixels (sub-sampling). The brightness data of the original block is divided into one or a plurality of blocks each of 8 × 8 pixels. A set of brightness (one to four) blocks and color difference (one × two components) blocks each of 8 × 8 pixels is called an MCU (Minimum Coded Unit).

In step S104, each block of 8 × 8 pixels obtained in step S103 undergoes discrete cosine transform (DCT calculation) to convert them into frequency components, obtaining 8 × 8 two-dimensional coefficient values. In step S105, the obtained two-dimensional coefficient values are quantized using quantization tables different between brightness and color difference. In step S106, the quantized data are encoded to assign Huffman codes separately for DC and AC components. As for the DC component, the difference value from the DC component value of an immediately preceding MCU or block is encoded. As for the AC component, a code is assigned to a pair of a quantized value and the number of preceding "0"s (zero run length) in a quantized data string.

In step S107, encoded data strings obtained in each block are aligned in zigzag order of brightness and color difference. In step S108, the processing in step S107 is executed for each MCU, and the encoded data strings of the respective MCUs are aligned finally.

JPEG data is expanded and returned to RGB data by processing reverse to that of the flowchart shown in Fig. 8.

As for the DC component of each color component, a value in an immediately preceding MCU is referred to in step S106. In general, JPEG expansion processing cannot start from an MCU at an arbitrary position, and expansion processing needs to be performed for each MCU sequentially from the start of JPEG data. As for the DC component value of each color component in each MCU, a value in an immediately preceding MCU is referred to in JPEG data. It is therefore difficult to segment part of an encoded image in MCUs or connect a plurality of encoded MCUs into JPEG data representing one image.

However, in the JPEG standard, special data called a restart marker is inserted between MCUs for every predetermined number of MCUs in JPEG encoding processing so that expansion processing can be performed from the inserted position. At the restart marker portion, encoding is performed using not the difference but the original value as the DC component without referring to the value in the immediately preceding MCU. Thus, encoded JPEG data can be cut off before the restart marker, or a plurality of JPEG data (equal in size) can be connected using the restart marker. For example, Japanese Patent Laid-Open No. 2006-129295 discloses a method of rewriting EOI markers at the ends of a plurality of JPEG images with restart markers, and then connecting the JPEG images into one JPEG image.

As described above, the use of the restart marker relatively facilitates cut-off and connection of JPEG data. However, the JPEG standard allows inserting a restart marker for only a predetermined number of MCUs within one JPEG data, and no restart marker can be inserted between MCUs at an arbitrary position. This standard allows inserting restart markers between all MCUs. In this case, however, the markers increase the size much more than the original encoded data amount.

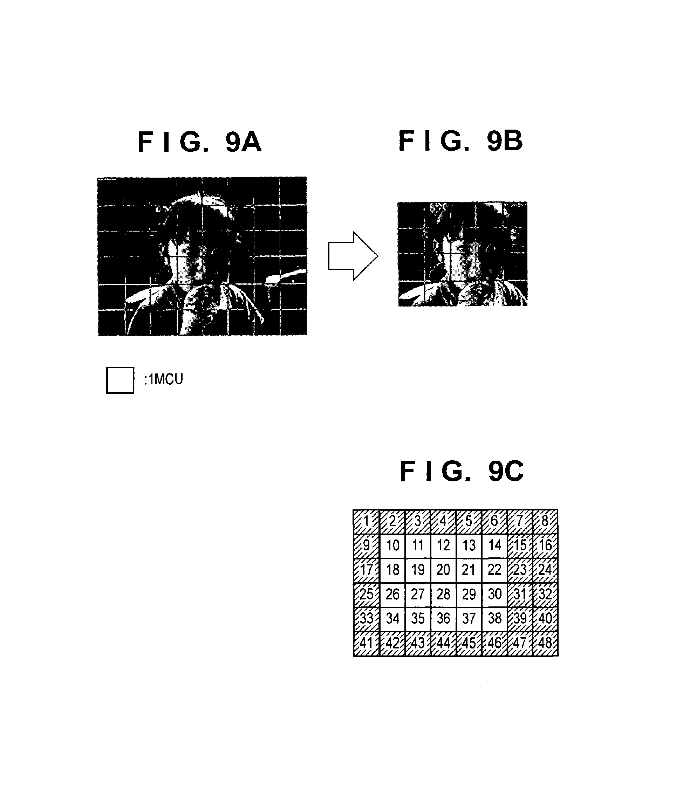

Figs. 9A to 9C are views for explaining the conventional problem.

For example, a case in which large JPEG data is created and then image data at an arbitrary position is segmented in MCUs from the JPEG data, like an image shown in Fig. 9B cropped from an image shown in Fig. 9A, will be examined. Fig. 9C shows that the original image has 48 MCUs (MCU 1 to MCU 48) and the cropped image has 20 MCUs (MCUs 10 to 14, 18 to 22, 26 to 30, and 34 to 38). In this case, if no restart marker is inserted between MCUs at the segmentation position, it is necessary to temporarily expand the entire JPEG data into an image before compression, execute cropping from the expanded image in MCUs, and then compress the cropped image again.

This processing requires Huffman decoding/encoding, DCT calculation, and quantization/dequantization in expansion and compression, and thus needs a long processing time and enormous processing resources (for example, hardware). In addition, the image quality deteriorates from original JPEG data due to recompression.

There is a need to create JPEG data representing one image by connecting a plurality of JPEG data compressed under the same conditions (sampling rate and quantization coefficient), as disclosed in Japanese Patent Laid-Open No. 2006-129295. However, another need also arises. For example, when a plurality of JPEG data to be connected are different in size, the number of MCUs between restart markers cannot be made constant in general, and the connected JPEG data cannot satisfy the JPEG standard.

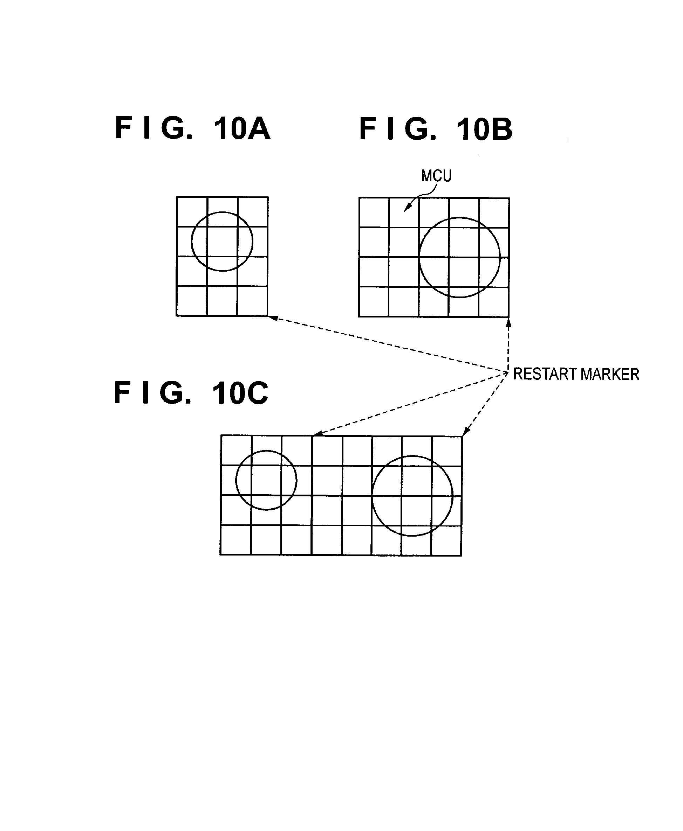

This will be explained with reference to Figs. 10A to 10C.

For example, a case in which JPEG data of $3 \times 4$ MCUs as shown in Fig. 10A and JPEG data of $5 \times 4$ MCUs as shown in Fig. 10B are connected side by side will be examined. In this case, if the restart marker is inserted after MCU data at the right end of each image, these data can be connected by the technique disclosed in Japanese Patent Laid-Open No. 2006-129295. However, the connected image data as shown in Fig. 10C does not satisfy the JPEG standard because the number of MCUs (restart interval) between restart markers is not constant.

## SUMMARY OF THE INVENTION

Accordingly, the present invention is conceived as a response to the above-described disadvantages of the conventional art.

For example, an image processing apparatus, image processing method, storing medium and according to this invention are capable of generating image data, which has undergone cropping of an image and connection of a plurality of images, at light processing load.

The present invention in its first aspect provides an image processing apparatus as specified in claims 1 to 6.

The present invention in its second aspect provides an image processing method as specified in claim 7.

The present invention in its third aspect provides a storing medium as specified in claim 8.

The invention is particularly advantageous since JPEG data representing one image can be segmented in MCUs without image quality deterioration or a plurality of JPEG data can be connected so as to generate JPEG data representing one image without image quality deterioration by a relatively small number of processes.

Further features of the present invention will become apparent from the following description of exemplary embodiments (with reference to the attached drawings).

## BRIEF DESCRIPTION OF THE DRAWINGS

Figs. 1A and 1B are perspective views showing the outer appearance of a multi-function printing (MFP) apparatus as a typical embodiment of the present invention.

Fig. 2 is a sectional view showing an image reading apparatus arranged at an upper portion of the MFP apparatus shown in Figs. 1A and 1B.

Fig. 3 is a block diagram showing the arrangement of the control circuit of the image reading apparatus.

Figs. 4A, 4B, 4C, and 4D are views showing a change of the state of each Huffman codeword when input JPEG data is segmented in MCUs.

Fig. 5 is a block diagram showing the arrangement of an image processing unit according to the first embodiment.

Figs. 6A, 6B, and 6C are views showing a state in which two JPEG data are connected side by side in the second embodiment.

Fig. 7 is a block diagram showing the arrangement of an image processing unit according to the second embodiment.

Fig. 8 is a flowchart showing general JPEG encoding processing.

Figs. 9A, 9B, and 9C are views showing JPEG image segmentation processing.

Figs. 10A, 10B, and 10C are views for explaining a problem when connecting JPEG data.

DESCRIPTION OF THE EMBODIMENTS

An exemplary embodiment of the present invention will now be described in detail in accordance with the accompanying drawings.

In this specification, the terms "print" and "printing" not only include the formation of significant information such as characters and graphics, but also broadly includes the formation of images, figures, patterns, and the like on a print medium, or the processing of the medium, regardless of whether they are significant or insignificant and whether they are so visualized as to be visually perceivable by humans.

First, the arrangement of a multi-function printing apparatus (to be referred to as an MFP apparatus) used as a common embodiment will be explained.

<MFP Apparatus>

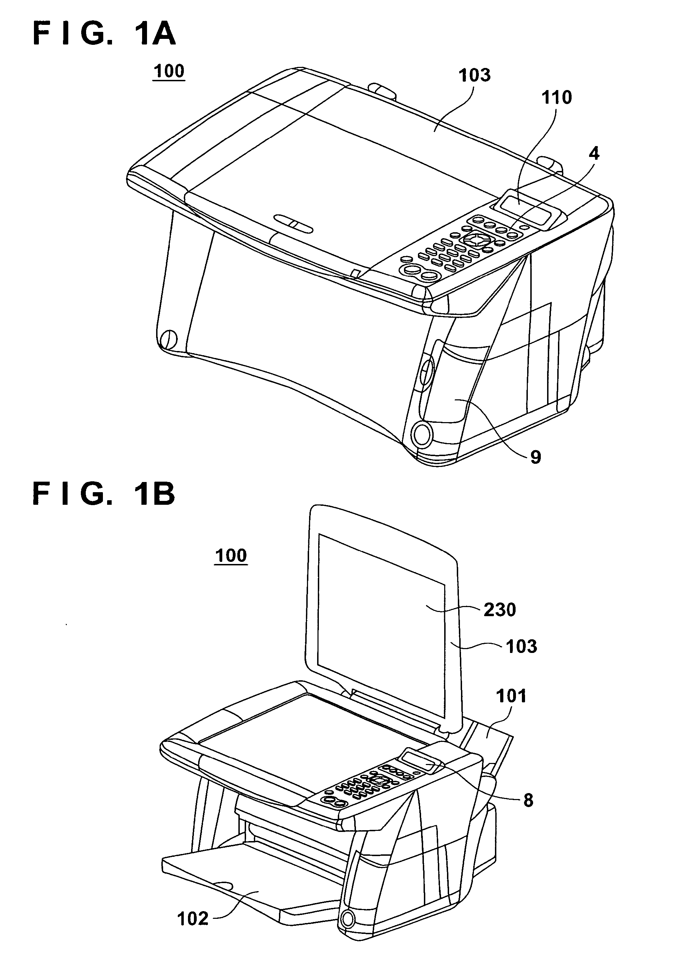

Figs. 1A and 1B are perspective views showing the outer appearance of an MFP apparatus 100 as a typical embodiment of the present invention.

The MFP apparatus prints an image on a printing medium such as printing paper based on image data from a connected host (not shown). In addition, the MFP apparatus can print based on image data stored in a memory card or the like, and optically read and copy an image original.

Fig. 1A shows a state in which an original cover 103 is closed. Fig. 1B shows a state in which a printing medium tray 101, a discharge tray 102, and the original cover 103 are open.

A reading unit 8 including a contact image sensor (CIS) unit reads an image original to output analog brightness signals of R, G, and B components. A card interface 9 is used to, for example, insert a memory card or the like which records an image file obtained by a digital still camera (not shown), and read image data from the memory card in accordance with a predetermined operation on an operation unit 4. The MFP apparatus 100 includes a display unit such as an LCD 110. The LCD 110 is used to display setting contents by the operation unit 4, a function selection menu, an image, and the like.

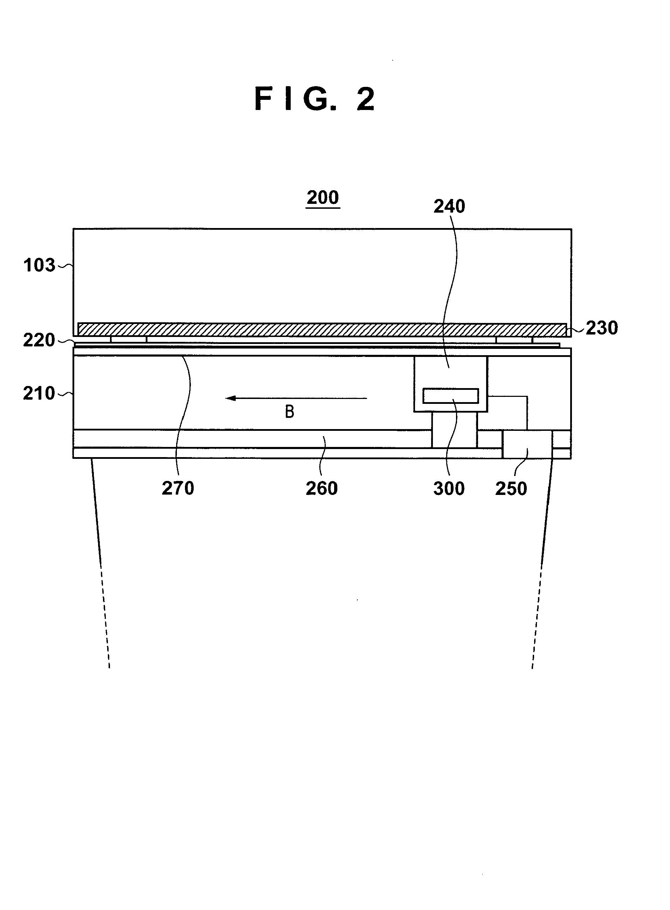

Fig. 2 is a sectional view showing an image reading apparatus arranged at an upper portion of the MFP apparatus shown in Figs. 1A and 1B.

As shown in Fig. 2, an image reading apparatus 200 includes a main body 210 and a pressure plate 230 which presses an original 220 to be read and cuts off external light. The pressure plate 230 is set on the lower surface of the original cover 103. The main body 210 includes an optical unit 240, a circuit board 250 electrically connected to the optical unit 240, a sliding rod 260 serving as a rail when scanning the optical unit 240, and an original platen glass 270. The optical unit 240 incorporates a contact image sensor (CIS) unit 300 which emits light to the original 220, receives the reflected light, and converts it into an electrical signal. In image reading, the optical unit 240 scans the original 220 set on the original platen glass 270 in a direction (sub-scanning direction) indicated by an arrow B, thereby reading an image printed on the original 220.

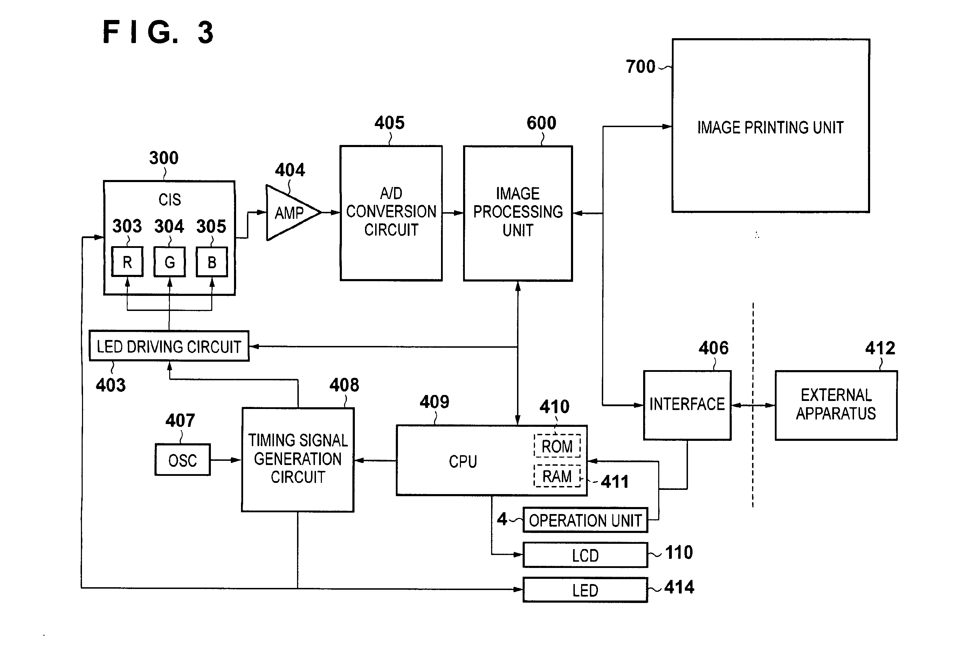

Fig. 3 is a block diagram showing the arrangement of the control circuit of the image reading apparatus (scanner).

In Fig. 3, the same reference numerals as those in Figs. 1A, 1B, and 2 denote the same parts, and a description thereof will not be repeated.

The CIS unit 300 line-sequentially reads a color image by switching and turning on LEDs 303 to 305 of respective colors for each line by an LED driving circuit 403. The LEDs 303 to 305 are light sources capable of changing the quantity of irradiation light to the original. The LED driving circuit 403 can arbitrarily turn on the LEDs 303 to 305.

That is, the LEDs 303 to 305 can be turned on sequentially one by one or two by two, or in some cases, all the three LEDs can be turned on. An amplifier (AMP) 404 amplifies a signal output from the CIS unit 300. An A/D conversion circuit 405 A/D-converts the amplified electrical signal and outputs digital image data of, for example, 16 bits for each color component of each pixel. An image processing unit 600 processes the digital image data converted by the A/D conversion circuit 405. An interface control circuit 406 reads image data from the image processing unit 600, exchanges control data with an external apparatus 412, and outputs image data to the external apparatus 412. Image data from the image processing unit 600 can also be output to an image printing unit 700. The external apparatus 412 is, for example, a personal computer (not shown), digital camera, or memory card.

The image processing unit 600 can process image data input from the external apparatus or image data generated by reading an image original by the image reading apparatus (scanner) 200, and output it to an image printing unit 700.

The image printing unit 700 converts image data from the interface control circuit 406 into binary data of "print" or "no-print" for each pixel, and prints an image on a printing medium using a printing agent. In the embodiment, the image printing unit 700 is an inkjet printer. However, for example, a laser beam printer using an electrophotographic method or a sublimation type printer is available. These printers are well known, and a detailed description thereof will be omitted.

The arrangement and operation of the image processing unit of the MFP apparatus having the above arrangement will be explained.

[First Embodiment]

An image processing unit 600 includes a buffer memory for temporarily storing input image data, and can perform image processing. In executing the processing, the user can operate an operation unit 4 to input an instruction. For example, the user can designate a cropping portion when segmenting part of JPEG data, which will be described below.

An image processing apparatus having a function of partially cropping a JPEG data rectangular image in MCUs from JPEG data representing one image, and generating the cropped result as JPEG data representing another one image without image quality deterioration, as shown in Fig. 8, will be explained.

First, the JPEG data structure will be described. For simplicity, an example in which the sampling ratio is 4 : 4 : 4 (no sub-sampling) and no restart marker exists will be explained. Assume that "0×00" (stuff byte) inserted after encoded data "0×FF" has already been removed and is not considered here.

One MCU is formed from three, Y, Cb, and Cr color components, and each color component represents a block of $8 \times 8$ pixels. In JPEG compression processing, a block of $8 \times 8$ pixels of each color component undergoes DCT calculation and quantization processing, obtaining a string of $8 \times 8$ coefficients. The coefficient-string is zigzag-scanned, and a DC component value (upper left end of $8 \times 8$ coefficient-strings) and AC component values (remaining 63 coefficients) are encoded in different ways. As for the DC component value, the difference from the original value of the DC component value of the same color component in an immediately preceding MCU is calculated, and one Huffman code is assigned to the calculated value. As for the AC component value, the number of zeros occupies a large portion among the 63 coefficient values. Hence, one Huffman codeword is assigned to a pair of "zero run length and non-zero numerical value". If zeros run to the end, a special Huffman codeword called EOB (End Of Block) is assigned. As a result, the Huffman codeword string of one component in one MCU is formed by aligning "one Huffman codeword of the DC component value" and "a plurality of Huffman codewords of the AC component values" in order named. Huffman codeword strings of the three color components are aligned to form one MCU code. Further, the codes of all MCUs which form an original image are aligned, forming the code part of JPEG image data representing one image.

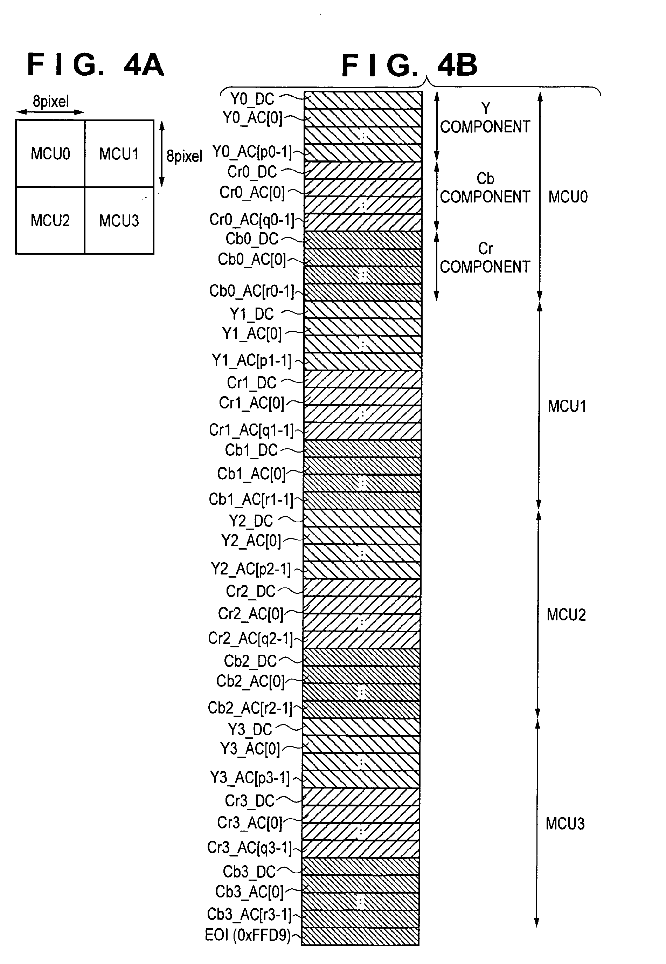

Figs. 4A to 4D are views showing a state in which the structure of the code part of JPEG data which forms one image is represented by the respective Huffman codewords.

Color JPEG data of $16 \times 16$ pixels at a sampling ratio of 4 : 4 : 4 as shown in Fig. 4A will be exemplified. The number of MCUs are $2 \times 2$. For descriptive convenience, respective MCUs are numbered as MCU0, MCU1, MCU2, and MCU3, as shown in Fig. 4A.

MCUi is formed from Y, Cb, and Cr color components, and each color component is formed from codewords indicating DC and AC component values. The DC component value is represented by one Huffman codeword, and the AC component values are represented by a plurality of Huffman codewords. This is represented in codeword unit as shown in Fig 4B.

Yi_DC, Cbi_DC, and Cri_DC (i = 0 to 3) are Huffman codewords representing the DC component values of the respective color components in MCUi. Yi_AC[k], Cbi_AC[k], and Cri_AC[k] are the kth Huffman codewords among Huffman codewords representing the AC component values of the respective color components in MCUi. The numbers of Huffman codewords representing the AC component values of the respective color components in MCUi are pi, qi, and ri respectively for the Y, Cb, and Cr components.

The Yi_DC, Cbi_DC, and Cri_DC codewords are decoded in accordance with the DC component Huffman tables of the respective color components of original JPEG data, and converted into numerical values. The converted values are defined as Dec[Yi_DC], Dec[Cbi_DC], and Dec[Cri_DC], respectively. Difference values from DC component values in an immediately preceding MCU are replaced with Huffman codewords in JPEG encoding. Thus, letting DY[i], DCb[i], and DCr[i] be values after expanding the DC component values of the respective color components in MCUi, these DC component values are given as follows.

$$\text{For } i = 0,$$

$$DY[0] = Dec[Y0\_DC],$$

$$DCb[0] = Dec[Cb0\_DC],$$

$$DCr[0] = Dec[Cr0\_DC].$$

$$\text{For } i \neq 0,$$

$$DY[i] = DY[i - 1] + Dec[Yi\_DC],$$

$$DCb[i] = DCb[i - 1] + Dec[Cbi\_DC],$$

$$DCr[i] = DCr[i - 1] + Dec[Cri\_DC].$$

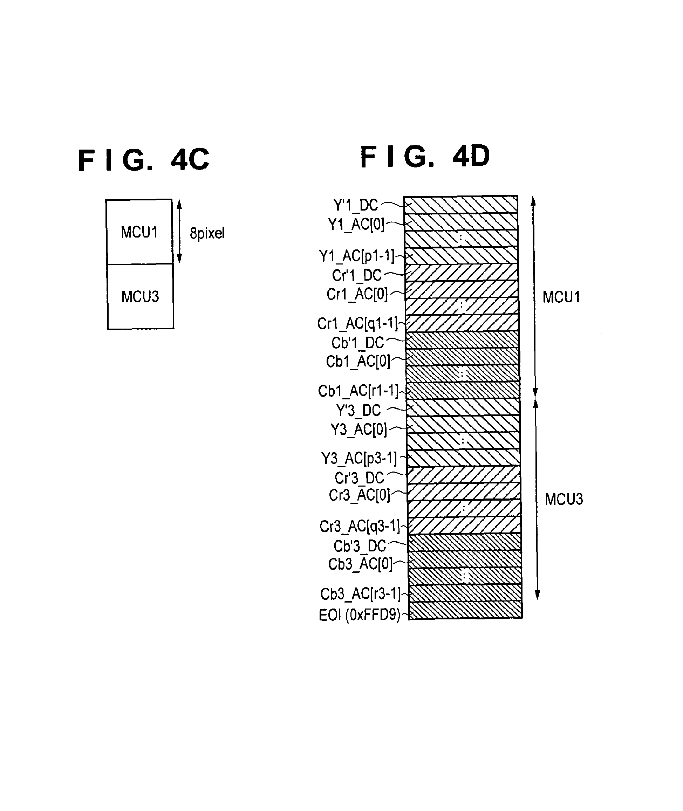

Processing of segmenting JPEG image data formed from only MCU1 and MCU3 as shown in Fig. 4C from JPEG image data formed from four MCUs as shown in Fig. 4A will be considered.

In this case, codewords representing the AC components of MCU1 and MCU3 can be directly used even in segmented JPEG data. However, as for the DC component value, the DC component value of MCU1 is encoded by referring to the difference value from the DC component value of MCU0, and that of MCU3 is encoded by referring to the difference value from the DC component value of MCU2. For this reason, only by simply segmenting codewords for the respective MCUs, segmented JPEG encoded data cannot be expanded normally. More specifically, the DC component value of each color component is calculated for each MCU at the left end after segmentation (that is, difference values are integrated in each MCU). Then, the difference from the DC component value of an immediately preceding MCU is calculated in a cropped image, and the difference value is encoded.

In the example shown in Fig. 4C, the DC component values of MCU1 and MCU3 are given by

$$DY[1] = DY[0] + Dec[Y1\_DC]$$

$$DCb[1] = DCb[0] + Dec[Cb1\_DC]$$

$$DCr[1] = DCr[0] + Dec[Cr1\_DC]$$

$$DY[3] = DY[2] + Dec[Y3\_DC]$$

$$DCb[3] = DCb[2] + Dec[Cb3\_DC]$$

$$DCr[3] = DCr[2] + Dec[Cr3\_DC].$$

Assume that a given value x is encoded into a codeword Enc[x] in accordance with the Huffman table of the DC component value. Letting Y'j_DC, Cb'j_DC, and Cr'j_DC (j = 1, 3) be Huffman codewords of the DC components of MCU1 and MCU3, they are given as follows.

More specifically,

$$Y'1\_DC = Enc[DY[1]]$$

$$= Enc[DY[0] + Dec[Y1\_DC]]$$

$$Cb'1\_DC = Enc[DCb[1]]$$

$$= Enc[DCb[0] + Dec[Cb1\_DC]]$$

$$Cr'1\_DC = Enc[DCr[1]]$$

$$= Enc[DCr[0] + Dec[Cr1\_DC]]$$

$$Y'3\_DC = Enc[DY[3] - DY[1]]$$

$$= Enc[DY[2] + Dec[Y3\_DC] - (DY[0] + Dec[Y1\_DC])]$$

$$Cb'3\_DC = Enc[DCb[3] - DCb[1]]$$

$$= Enc[DCb[2] + Dec[Cb3\_DC] - (DCb[0] + Dec[Cb1\_DC])]$$

$$Cr'3\_DC = Enc[DCr[3] - DCr[1]]$$

$$= Enc[DCr[2] + Dec[Cr3\_DC] - (DCr[0] + Dec[Cr1\_DC])].$$

The codewords are aligned as shown in Fig. 4D using the obtained Huffman codewords of the DC component values of MCU1 and MCU3. A JPEG header is added at the start, and an EOI marker is added at the end. In this way, JPEG data of an image formed from only MCU1 and MCU3 in Fig. 4C can be generated.

That is, for segmented MCUs, the DC component values of MCUs at the left and right ends and the difference value between them are calculated. As for the MCU at the left end, the DC component codeword is replaced with a codeword obtained from the difference value. As a result, the codewords of the MCUs after segmentation can be handled as JPEG data representing one image.

When segmenting encoded data in MCUs from JPEG data, the DC component value of an MCU at the left end of the cropped image is calculated, and only a codeword representing the DC component value is rewritten. The remaining codewords are copied from those of the original JPEG data without any modification. Even the segmented result can therefore be handled as JPEG data. This segmentation processing requires neither quantization/dequantization nor DCT calculation, does not require so many hardware resources (many gates of a logical circuit or high CPU performance), and does not deteriorate the image quality.

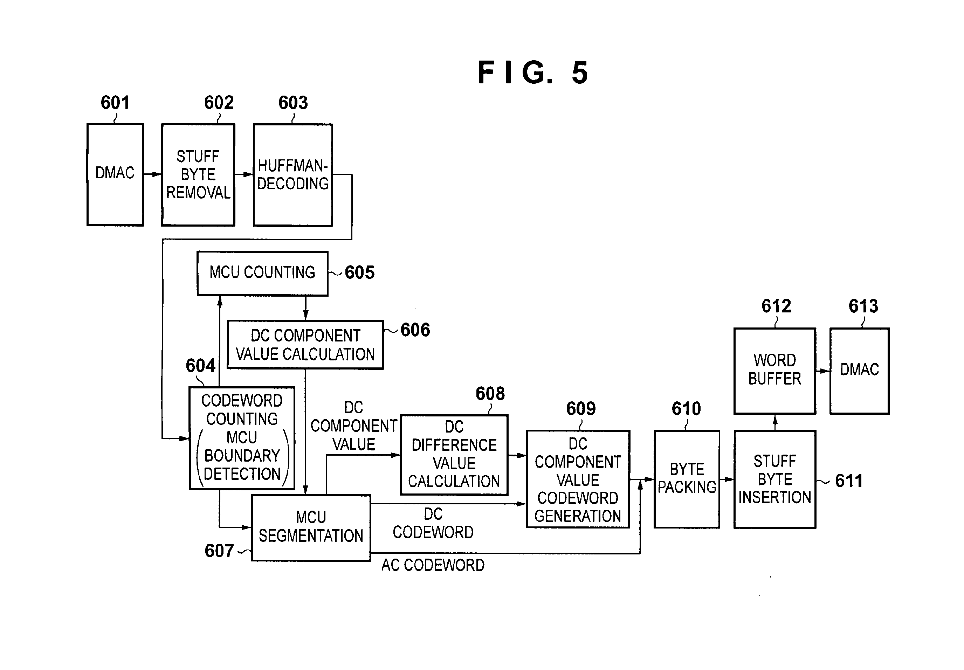

Fig. 5 is a block diagram showing the internal arrangement of the image processing unit 600. The image processing unit processes JPEG data stored in the internal buffer memory. The JPEG data is prepared by converting, into a YCbCr color space, RGB image data obtained by reading an image original by the scanner, and JPEG-encoding the YCbCr data. JPEG encoding itself is well known, and a description thereof will be omitted. Note that each block shown in Fig. 5 may be implemented by a hardware circuit such as ASIC or a software processing module (program). When JPEG data is input from an external apparatus, the image processing unit 600 simply executes processing on the inputted JPG data.

Referring to Fig. 5, a DMA controller (DMAC) 601 reads out JPEG data from the memory, and a stuff byte removal unit 602 removes a stuff byte (0×00 after 0×FF) from the readout JPEG data. A Huffman-encoding unit 603 Huffman-encodes the JPEG data and decomposes it into codewords. A codeword counter 604 analyzes and counts the codewords, and discriminates boundaries between MCUs, those between the Y, Cb, and Cr color components, and those between the DC and AC component values. An MCU counter 605 counts the number of MCUs of input encoded data in accordance with the result of boundary discrimination by the codeword counter 604. A DC component value calculation unit 606 calculates the DC component values of the respective color components of each MCU.

Based on the MCU count, an MCU segmentation unit 607 discriminates codewords contained in MCUs to be deleted and those contained in MCUs to be segmented and kept among the codewords converted by the Huffman-encoding unit 603. For segmented MCUs, a DC difference value calculation unit 608 calculates, from the calculated DC component values of the respective MCUs, the difference value between DC component values of each color component in MCUs at the right and left ends (connection portion of the JPEG data) out of the segmented MCUs.

For the calculated DC difference value, a DC component value codeword generation unit 609 generates a Huffman codeword corresponding to the difference value. A byte packing unit 610 integrates, in bytes, the codewords of segmented AC components and the codeword of the DC component rewritten by the DC component value codeword generation unit 609. According to the JPEG standard, a stuff byte insertion unit 611 inserts a byte "0×00" after one byte "0×FF" in the JPEG data codewords integrated in bytes, outputting the resultant encoded data string to a word buffer 612. The word buffer 612 can temporarily store output encoded data strings by a certain amount.

When codeword data strings are stored in the word buffer 612 by a certain amount, a DMA controller (DMAC) 613 DMA-outputs the data.

Note that the DMA controller 601 to DC component value calculation unit 606 have the same functions as processes performed within a general JPEG expansion apparatus. The byte packing unit 610 to DMAC 613 have the same functions as processes performed within a general JPEG compression apparatus.

The operations of the respective units of the image processing unit will be explained.

First, the DMAC 601 receives JPEG data. Assume that the input JPEG data does not have a restart marker, and the JPEG header and EOI marker are removed in advance.

The stuff byte removal unit 602 decomposes the input JPEG data into bytes, and removes "0×00" inserted after "0×FF". This allows subsequent blocks to handle input data as a pure Huffman codeword group. The Huffman-encoding unit 603 analyzes the input Huffman codeword group and separates it into respective codewords. For each color component in each MCU, the Huffman-encoding unit 603 outputs one codeword representing a DC component difference value and a plurality of codewords each representing a combination of "zero run length + non-zero numerical value" of an AC component.

The codeword counter 604 decodes the codewords output from the Huffman-encoding unit 603, and counts the AC and DC components, respectively. If the sum of the number of zeros and the number of non-zero numerical values reaches "63" for the codewords of AC component values or a codeword representing EOB appears midway, the codeword counter 604 determines that the boundary between the respective color components in the MCU has come. The codeword counter 604 simply sends the codewords of the DC and AC components to the MCU segmentation unit 607.

The MCU counter 605 counts the codewords decomposed by the codeword counter 604 for each MCU. The DC component value calculation unit 606 calculates the DC component values of all the color components of all input MCUs, and integrates the difference values for each color component in each MCU.

Based on the MCU count, the MCU segmentation unit 607 truncates codewords and DC component values other than those of segmented MCUs out of the codewords output from the Huffman-encoding unit 603. The MCU segmentation unit 607 transfers the remaining DC component values to the DC difference value calculation unit 608, the remaining DC codewords to the DC component value codeword generation unit 609, and AC codewords to the byte packing unit 610. Note that a cropping instruction indicating a portion to be cropped may be input by the user from the operation unit 4, or contained in a command transferred from an external apparatus together with JPEG data.

The DC difference value calculation unit 608 obtains the difference value between DC component values in segmented MCUs at the right and left ends.

In the example shown in Fig. 9C, the DC difference value calculation unit 608 calculates, for each color component, differences between DC component values in MCUs 14 and 18, MCUs 22 and 26, and MCUs 30 and 34 out of MCUs 10, 14, 18, 22, 26, 30, and 34. As for MCU 10, its value is set as the difference value (= difference from 0).

The DC component value codeword generation unit 609 converts, into codewords in accordance with the DC component Huffman table of original JPEG data, the DC component difference values of MCUs (MCUs 10, 18, 26, and 34 in the example of Fig. 9C) calculated by the DC difference value calculation unit 608. The DC component value codeword generation unit 609 does not convert the codewords of the DC component values of the remaining MCUs (MCUs 11 to 14, 19 to 22, 27 to 30, and 35 to 38). After that, the DC component value codeword generation unit 609 outputs the DC component codewords of all the MCUs to the byte packing unit 610.

The byte packing unit 610 integrates and aligns the DC component codewords of each MCU calculated by the DC component value codeword generation unit 609 and AC component codewords segmented by the MCU segmentation unit 607. For each MCU, the byte packing unit 610 aligns the DC component codeword of the Y component, the AC component codewords of the Y component, the DC component codeword of the Cb component, the AC component codewords of the Cb component, the DC component codeword of the Cr component, and the AC component codewords of the Cr component in order named, and concatenates them in bits.

The stuff byte insertion unit 611 divides the code string generated by the byte packing unit 610 into bytes. When the byte "0×FF" has come, the stuff byte insertion unit 611 inserts "0×00" as the next byte. As for finally output MCU data, bits "1" are filled up to the byte boundary, and the EOI marker (0×FFD9) is added at the end. The output word buffer 612 accumulates output data up to a unit (for example, 32 bytes) convenient for DMA. Finally, the DMAC 613 DMA-outputs data accumulated in the output word buffer.

By performing the above-described processing, only necessary part of input JPEG data can be segmented in MCUs and output as image data compliant with the JPEG standard.

According to the above-described embodiment, JPEG data can be segmented and connected in MCUs without image quality deterioration. Since neither quantization/dequantization nor DCT calculation is performed, processing resources can be saved such that the number of gates of a logical circuit can be decreased when the above processing is implemented by hardware, or the processing time can be shortened when it is implemented by software.

[Second Embodiment]

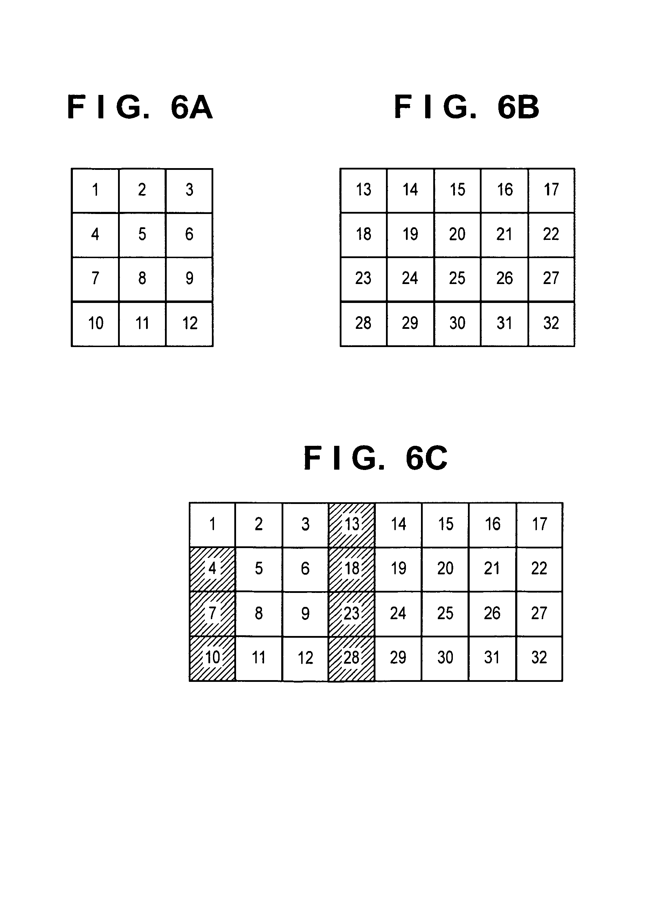

The second embodiment will describe an image processing apparatus having a function of connecting a plurality of JPEG data in MCUs, and generating JPEG data representing one image as a result of the connection without image quality deterioration, as shown in Figs. 6A to 6C. A plurality of JPEG data to be connected need to be equal in the number of color components, sampling ratio, Huffman table, and quantization table.

For descriptive convenience, the second embodiment will explain a case in which two JPEG data equal in height, as shown in Figs. 6A and 6B, are connected side by side. However, by preparing monochrome JPEG data of one MCU in advance, JPEG data of an arbitrary size can be connected at an arbitrary position (MCU unit) using the same method. When connecting three or more JPEG data, processing of connecting two JPEG data is repeated. Note that a connection instruction indicating a portion to be connected may be input by the user from an operation unit 4, or contained in a command transferred from an external apparatus together with JPEG data.

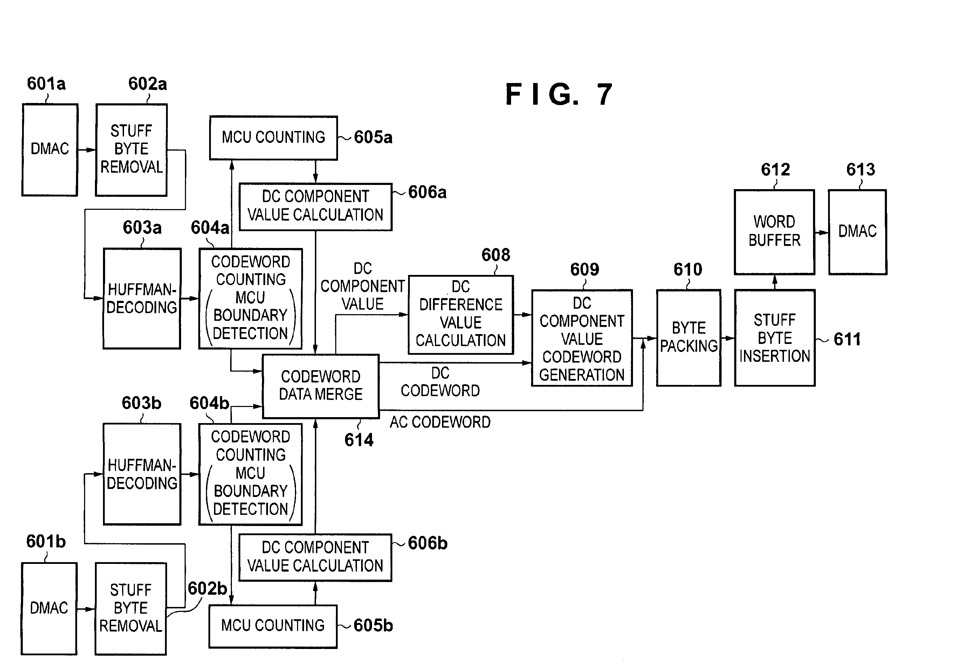

Fig. 7 is a block diagram showing the arrangement of an image processing unit according to the second embodiment. Each block shown in Fig. 7 may be implemented by hardware or software, similar to the first embodiment. In Fig. 7, reference numerals 601a to 606a and 601b to 606b denote the same parts as 601 to 606 in Fig. 5. Since two JPEG images are handled in this example, there are two input JPEG data. These data need to be processed independently, so arrangements as shown in Fig. 7 are adopted. The former arrangement (601a to 606a) will be called pass A and the latter (601b to 606b) will be called pass B.

In this example, input image data are those shown in Figs. 6A and 6B. Assume that JPEG data shown in Fig. 6A passes through pass A, and JPEG data shown in Fig. 6B passes through pass B. The same reference numerals as those shown in Fig. 5 denote the same parts, and a description thereof will not be repeated.

In Fig. 7, two passes are explicitly represented to explain the functions of the second embodiment, and the building elements of these passes are denoted by 601a to 606a and 601b to 606b. However, the building elements are not always required by the number of passes. For example, the building elements 601 to 606 as shown in Fig. 5 may perform parallel processing for two passes (two data streams).

A characteristic arrangement in the image processing unit of the second embodiment is a codeword data merge unit 614. The codeword data merge unit 614 merges the codewords of JPEG data representing two images to be connected.

As for MCUs 1, 2, and 3 of JPEG data shown in Fig. 6A that passes through pass A, the codeword data merge unit 614 receives the codewords of the DC and AC components from the codeword counter 604a, and DC component values from the DC component value calculation unit 606a. The codeword data merge unit 614 transfers the DC component values, DC codewords, and AC codewords to a DC difference value calculation unit 608, DC component value codeword generation unit 609, and byte packing unit 610, respectively.

Then, processing of pass A temporarily stops, and the codeword data merge unit 614 receives codewords and DC component values from the codeword counter 604b and DC component value calculation unit 606b for MCUs 13 to 17 of JPEG data shown in Fig. 6B that passes through pass B. Similarly, the codeword data merge unit 614 transfers the DC component values, DC codewords, and AC codewords to the DC difference value calculation unit 608, DC component value codeword generation unit 609, and byte packing unit 610, respectively.

After that, processing of pass B stops, and the codeword data merge unit 614 performs processing for MCUs 4, 5, and 6 of the JPEG data shown in Fig. 6A that passes through pass A. Subsequently, the same processing is repeated.

The DC difference value calculation unit 608 recalculates the DC difference value between blocks to be connected to each other in the JPEG data shown in Figs. 6A and 6B. In the example of Figs. 6A to 6C, hatched blocks in Fig. 6C undergo this processing. More specifically, the difference from the DC component value of MCU 3 is calculated for MCU 13. In the same fashion, the difference value of the DC component value is calculated between MCU 4 and MCU 17, MCU 18 and MCU 6, MCU 7 and MCU 22, MCU 23 and MCU 9, MCU 10 and MCU 27, and MCU 28 and MCU 12. The DC component value codeword generation unit 609 converts the calculated difference values into the codewords of the DC component values.

Thereafter, similar to the first embodiment, only DC component codewords at boundaries between connected MCUs (MCUs 13, 4, 18, 7, 23, 10, and 28) are rewritten. The codewords of the remaining DC components and all AC components are aligned in MCU order shown in Fig. 6C by simply using those of corresponding MCUs shown in Figs. 6A and 6B.

The byte packing unit 610 executes byte packing for the aligned JPEG data, and a stuff byte insertion unit 611 executes stuff byte insertion. The data are output to an output word buffer 612 and temporarily saved. Finally, a DMAC 613 DMA-outputs the processed JPEG data. In this manner, the two JPEG data shown in Figs. 6A and 6B can be connected, obtaining JPEG data shown in Fig. 6C.

According to the above-described embodiment, a plurality of JPEG data each representing one image can be connected in MCUs, and JPEG data representing the connected images can be generated without image quality deterioration.

As described above, according to these embodiments, JPEG data is input and Huffman-encoded, and each DC component value in each MCU is calculated. Then, the relative value of the DC component value is recalculated at a portion where JPEG data is segmented or connected. After rewriting only the codeword of the DC component value at this portion, the codewords of remaining components (AC components values) are copied from the input side to the output side.

In the above cases, only the code part of JPEG data is targeted, and the JPEG header containing the image size, sampling ratio, and quantization table is not processed. In image cropping and connection, the header of a processed image is assumed to be processed properly by another processing unit.

In the above embodiments, JPEG data of a cropped or connected image is created by rewriting the DC component values of JPEG data. However, the present invention is not limited to this, and it is also possible to copy original JPEG data and rewrite the DC component values of the copied JPEG data. Alternatively, only data not to be rewritten may be copied out of original JPEG data, and data to be rewritten may be newly written in the copied data.

Further, calculation of the difference value of the DC component value and rewriting of the difference value may be executed for only a block specified as a data rewrite target upon connection or cropping of an image. Alternatively, such calculation and rewriting may be performed for all blocks contained in an image newly acquired by connection or cropping of an image.

The above embodiments have exemplified JPEG data. However, the present invention is applicable not only to JPEG data, but also to image data containing encoded data respectively corresponding to a plurality of blocks as differences from encoded data of consecutive blocks in the image.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. An image processing apparatus comprising:

   an inputting unit configured to input image data containing a difference between encoded data of two consecutive blocks corresponding to an image which is divided into a plurality of blocks;
   a calculating unit configured to, when one of cropping and connection of an image based on the image data is instructed, specify two blocks, from the plurality of blocks, which newly become consecutive in an image newly acquired by one of the cropping and connection of the image, and to calculate, based on encoded data contained in the image data, a difference between encoded data of the specified two blocks; and
   a creation unit configured to create image data which corresponds to the newly acquired image and contains the difference calculated by the calculating unit.

2. The apparatus according to claim 1,
   wherein the creation unit creates image data containing the difference calculated by the calculating unit as encoded data of one block out of the two blocks.

3. The apparatus according to claim 1, wherein when the cropping of the image is instructed, the calculating unit specifies at least one block corresponding to an end of an image newly acquired by the cropping of the image out of a plurality of blocks contained in the image.

4. The apparatus according to claim 1, wherein when the connection of the image is instructed, the calculating unit specifies at least one block to be connected to anther image out of a plurality of blocks contained in the image.

5. The apparatus according to claim 1, wherein the creation unit creates image data by rewriting, with the difference calculated by the calculating unit, encoded data contained in image data to undergo one of the cropping and connection.

6. The apparatus according to claim 1, wherein the image data includes JPEG data, and
the calculating unit calculates the difference between DC component values of two consecutive blocks in an image based on JPEG data.

7. An image processing method comprising:

inputting image data containing a difference between encoded data of two consecutive blocks corresponding to an image which is divided into a plurality of blocks;
when one of cropping and connection of an image based on the image data is instructed, specifying two blocks, from the plurality of blocks, which newly become consecutive in an image newly acquired by one of the cropping and connection of the image;
calculating, based on encoded data contained in the image data, a difference between encoded data of the specified two blocks; and
creating image data which corresponds to the newly acquired image and contains the calculated difference.

8. A storing medium storing a program for executing an image processing method according to claim 7.

# F I G. 1A

# F I G. 1B

# FIG. 2

# F I G. 3

EP 2 469 857 A2

# F I G. 4A

8pixel

| MCU0 | MCU1 |
|------|------|
| MCU2 | MCU3 |

8pixel

# F I G. 4B

Y0_DC
Y0_AC[0]
Y0_AC[p0-1]
Cr0_DC
Cr0_AC[0]
Cr0_AC[q0-1]
Cb0_DC
Cb0_AC[0]
Cb0_AC[r0-1]

Y COMPONENT
Cb COMPONENT
Cr COMPONENT

MCU0

Y1_DC
Y1_AC[0]
Y1_AC[p1-1]
Cr1_DC
Cr1_AC[0]
Cr1_AC[q1-1]
Cb1_DC
Cb1_AC[0]
Cb1_AC[r1-1]

MCU1

Y2_DC
Y2_AC[0]
Y2_AC[p2-1]
Cr2_DC
Cr2_AC[0]
Cr2_AC[q2-1]
Cb2_DC
Cb2_AC[0]
Cb2_AC[r2-1]

MCU2

Y3_DC
Y3_AC[0]
Y3_AC[p3-1]
Cr3_DC
Cr3_AC[0]
Cr3_AC[q3-1]
Cb3_DC
Cb3_AC[0]
Cb3_AC[r3-1]
EOI (0xFFD9)

MCU3

# F I G. 4C

MCU1   ↕ 8pixel

MCU3

# F I G. 4D

Y'1_DC
Y1_AC[0]
Y1_AC[p1-1]
Cr'1_DC
Cr1_AC[0]
Cr1_AC[q1-1]
Cb'1_DC
Cb1_AC[0]
Cb1_AC[r1-1]
Y'3_DC
Y3_AC[0]
Y3_AC[p3-1]
Cr'3_DC
Cr3_AC[0]
Cr3_AC[q3-1]
Cb'3_DC
Cb3_AC[0]
Cb3_AC[r3-1]
EOI (0xFFD9)

MCU1

MCU3

# FIG. 5

EP 2 469 857 A2

# F I G. 6A

| | | |
|---|---|---|
| 1 | 2 | 3 |
| 4 | 5 | 6 |
| 7 | 8 | 9 |
| 10 | 11 | 12 |

# F I G. 6B

| | | | | |
|---|---|---|---|---|
| 13 | 14 | 15 | 16 | 17 |
| 18 | 19 | 20 | 21 | 22 |
| 23 | 24 | 25 | 26 | 27 |
| 28 | 29 | 30 | 31 | 32 |

# F I G. 6C

| | | | | | | | |
|---|---|---|---|---|---|---|---|
| 1 | 2 | 3 | 13 | 14 | 15 | 16 | 17 |
| 4 | 5 | 6 | 18 | 19 | 20 | 21 | 22 |
| 7 | 8 | 9 | 23 | 24 | 25 | 26 | 27 |
| 10 | 11 | 12 | 28 | 29 | 30 | 31 | 32 |

**F I G. 7**

EP 2 469 857 A2

# F I G. 8

```
┌────────────────────────────────────┐
│         CONVERT RGB INTO YCbCr       │── S101
└────────────────────────────────────┘
                   │
                   ▼
┌────────────────────────────────────┐
│   DIVIDE INPUT IMAGE INTO BLOCKS EACH │── S102
│  OF X PIXELS × Y PIXELS (X, Y = 8 OR 16)│
└────────────────────────────────────┘
                   │
                   ▼
┌────────────────────────────────────┐
│     SUB-SAMPLE COLOR DIFFERENCE DATA  │── S103
└────────────────────────────────────┘
                   │
                   ▼
┌────────────────────────────────────┐
│         PERFORM DCT TRANSFORM         │── S104
└────────────────────────────────────┘
                   │
                   ▼
┌────────────────────────────────────┐
│         PERFORM QUANTIZATION          │── S105
└────────────────────────────────────┘
                   │
                   ▼
┌────────────────────────────────────┐
│       PERFORM HUFFMAN-ENCODING        │── S106
└────────────────────────────────────┘
                   │
                   ▼
┌────────────────────────────────────┐
│ ALIGN ENCODED DATA IN ORDER OF BRIGHTNESS │── S107
│   AND COLOR DIFFERENCE FOR EACH MCU   │
└────────────────────────────────────┘
                   │
                   ▼
┌────────────────────────────────────┐
│     INTEGRATE ENCODED DATA STRINGS    │── S108
│        OF RESPECTIVE MCUS             │
└────────────────────────────────────┘
```

# F I G. 9A

□ :1MCU

# F I G. 9B

# F I G. 9C

| 1 | 2 | 3 | 4 | 5 | 6 | 7 | 8 |
|---|---|---|---|---|---|---|---|
| 9 | 10 | 11 | 12 | 13 | 14 | 15 | 16 |
| 17 | 18 | 19 | 20 | 21 | 22 | 23 | 24 |
| 25 | 26 | 27 | 28 | 29 | 30 | 31 | 32 |
| 33 | 34 | 35 | 36 | 37 | 38 | 39 | 40 |
| 41 | 42 | 43 | 44 | 45 | 46 | 47 | 48 |

# F I G. 10A     F I G. 10B

MCU

# F I G. 10C

RESTART MARKER

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006129295 A